# EUROPEAN PATENT SPECIFICATION

(11) **EP 1 057 703 B1**
(45) Date of publication and mention of the grant of the patent: **10.11.2004**
(21) Application number: 00304138.1
(22) Date of filing: 17.05.2000
(51) Int. Cl.: B60S 1/50

(54) **A filler arrangement**
Einfüllvorrichtung
Dispositif de remplissage

(30) Priority: 02.06.1999 GB 9912796
(43) Date of publication of application: 06.12.2000
(73) Proprietor: Bayerische Motoren Werke Aktiengesellschaft, 80809 München (DE)
(72) Inventor: Mellor, Michael, Coleshill, Birmingham B46 3EX (GB)
(74) Representative: Schernhammer, Herbert

(56) References cited:
- DE-A- 4 123 947
- DE-C- 19 546 085
- GB-A- 431 604
- US-A- 5 253 920

## Description

The present invention relates to a filler arrangement and more particularly to a filler arrangement for the wash/wipe facility of a motor vehicle windscreen wiper mechanism.

There is a clear requirement to fill reservoirs with appropriate fluids, and occasionally particulate matter, for various functional mechanisms within a motor vehicle. In particular, there is a requirement to replenish the wash fluid from a windscreen wiper mechanism periodically in order to ensure there is adequate fluid available for cleaning the windscreen when required.

Traditionally, the fluid reservoirs for functional mechanisms within a vehicle have been located within the engine compartment. In such circumstances, it is necessary to lift the motor vehicle bonnet or hood in order to gain access to these reservoirs. Unfortunately, and as will be appreciated by those skilled in the art, the increasing use of sound absorption and deadening materials within a motor vehicle has significantly increased the weight and therefore the difficulty of lifting a motor vehicle bonnet or hood. Thus, the inherent inconvenience of lifting the vehicle bonnet for simple reservoir replenishment has been compounded by the increased difficulty of lifting that bonnet particularly for older, and sometimes female, motorists.

DE 195 46 085 C1 discloses a container for a windscreen washer unit of a motor vehicle according to the preamble of claim 1. The container is set in a part of the body of the motor vehicle closable by a bonnet. A recess is provided in the bonnet in the area of the filler opening which is closable independently of the bonnet position. The recess can have a hinged closure. It can be set in the area of an air intake grid integrated in the bonnet where the part of the grid above the container opening forms a flap swivelling about an axis across the swivel axis of the bonnet. This known arrangement enables easy access to the container without having to open the bonnet.

Clearly, it would be advantageous to provide a filling arrangement which can be accessed externally without opening the vehicle bonnet or other closure. However, it will also be understood that the aesthetic appearance in terms of styling and shape of the vehicle should not be diminished by such external access to a filler arrangement. Furthermore, any exterior filler arrangement should not significantly add to vehicle manufacturing cost, maintenance or significantly alter a vehicles' performance in terms of crash response, aerodynamics and susceptibility to wear and tear.

It is an object of the present invention to provide a filler arrangement which substantially meets the above mentioned criteria without incurring significant additional problems with regard motor vehicle performance.

In accordance with the present invention there is provided a filler arrangement coupled to a wash/wipe reservoir of a motor vehicle, the arrangement comprising an externally accessible filler funnel with a taper section leading to a conduit coupling end and a stopper member configured to be reciprocally shaped with respect to at least a part of the taper section to provide a labyrinth seal, when associated in use with that taper section, which is adequate to inhibit access of contaminants to the conduit coupling end through the funnel section whilst the stopper member can be displaced to allow access to the taper section for presentation of replacement fluid therethrough to the conduit coupling end.

Typically, the taper section and stopper member will include appropriate tongue and groove inter-engaging portions to provide the labyrinth seal. These tongue and groove portions may be at a top of the taper section and edge of the stopper member respectively or at intermediate positions therebetween. Additionally, a gutter or moat edge may be provided between the taper section and the stopper member in order to further inhibit access of contaminants to the conduit coupling end. This gutter or moat edge may include sink or drain holes or apertures which lead contaminants away from access to the conduit coupling end.

The stopper member may be vertically displaceable from the taper section in order to allow access to the taper section for presentation of the replacement fluid to the conduit coupling end. Alternatively, a hinge may be provided between the filler funnel and the stopper member whereby the stopper member is displaced by rotation thereabouts to allow access to the taper section.

With a hinge between the filler funnel and the stopper member, the filler arrangement may be of an integral construction. This integral construction may be formed from a moulded plastics material.

A supplemental washer seal may be provided between the taper section and the stopper member to augment, in use, the labyrinth seal between that taper section and the stopper member.

Normally, the filler arrangement will be in a vertical presentation within a motor vehicle in order to facilitate pouring of the replacement fluid into the filler funnel for presentation to the conduit coupling end.

The filler arrangement will typically be secured to the plenum cover of a ventilation system between the bonnet edge and windscreen of a motor vehicle.

An embodiment of the present invention will now be described by way of example only with reference to the accompanying drawings in which;
Figure 1 is a pictorial representation of a filler arrangement associated with a motor vehicle; and,
Figure 2 is a cross-section illustrating the filler arrangement depicted in Figure 1.

As indicated above, location of a filler arrangement within a motor vehicle at a position where there is external accessibility can present significant problems. For example, it will be appreciated that such a filler arrangement may diminish the overall aesthetic appearance of a motor vehicle and possibly alter the response of that vehicle to collision impacts with other vehicles and pedestrians.

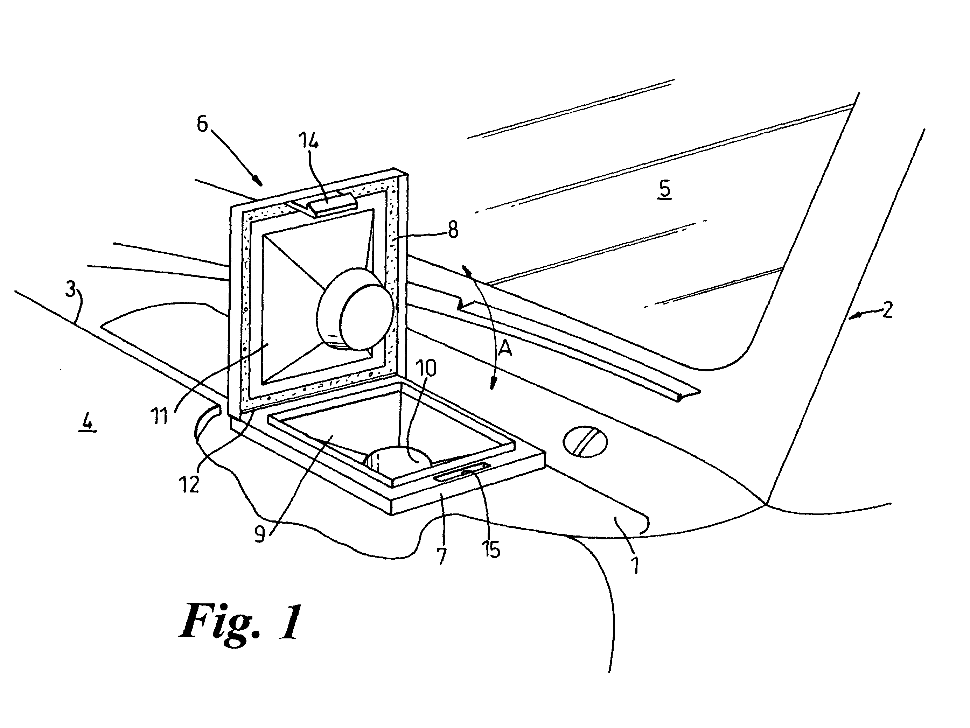

In accordance with the present invention, and as depicted in Figure 1, a filler arrangement is provided which is located in a plenum chamber cover 1 of a motor vehicle 2 ventilation system. This plenum chamber cover 1 is located between a rear edge 3 of a vehicle bonnet 4 and a windscreen 5. Thus, as seen from the exterior of the vehicle 2, it will be understood that the recessed location of the plenum chamber cover 1 ensures that a filler arrangement 6 located in that cover 1 does not appear to significantly alter the aesthetic appearance of the vehicle 2.

With an exteriorly accessible filler arrangement 6 it will be understood that there may be problems with regard to ingress of contaminants such as rain water and dirt. This problem is particularly present in a recessed location such as that described with regard to the embodiment depicted in Figure 1. In such circumstances, it is necessary to ensure that there is an adequate seal for the filler arrangement to prevent, or at least inhibit, ingress of contaminants. It will be understood that the filler arrangement will generally be coupled to a functional mechanism of the vehicle and, most typically, the wash/wipe reservoir of the windscreen wiper mechanism. Any ingress of contaminants may thereby block wash fluid distribution pipes and presentation jets and, additionally, may alter the de-icer composition of the wash fluid. Thus, the present invention relates to provision of a filler arrangement which can be located in an exteriorly accessible position, whilst also ensuring there is adequate sealing of the filler arrangement 6 to ensure contaminants cannot alter the functional composition of a fluid held in a reservoir for a vehicle functional mechanism.

As depicted in Figure 1, the filler arrangement 6 comprises a filler funnel 7 and a stopper member 8. In Figure 1, a taper section 9 of the filler funnel 7 is illustrated along with a conduit coupling end 10 which extends or leads from the taper section 9. The stopper member 8 includes a reciprocally shaped portion 11 which is configured to at least be consistent with a part of the taper section 9 of the filler funnel 7.

In the embodiment depicted in Figure 1, the filler funnel 7 and the stopper member 8 are secured together along a respective hinge edge 12. Thus, the stopper member 8 may pivot rotate about that hinge edge 12 in the direction of arrowheads A into and out of association with the filler funnel 7. Clearly, as an alternative, it will be appreciated that the filler funnel 7 and the stopper member 8 could be discrete components whereby the stopper member 8 may be displaced from association with the filler funnel 7 by a vertical motion. In any event, it is necessary to provide appropriate lock members 14, 15 in the respective stopper member 8 and filler funnel 7 in order to retain association between these components 7, 8 when required. As illustrated, a simple latch detent lock mechanism will normally suffice.

As indicated above, with regard to exteriorly accessible filler arrangements, it is important to consider the potential for contamination of a fluid reservoir to be filled through the filler arrangement 6. Thus, in accordance with the present invention, the filler funnel 7 and, in particular, the taper section 9 and the stopper member 8 are configured such that in association they provide a labyrinth seal therebetween. It will be appreciated that generally, any contaminants such as rain water or dirt will not be pressurised or otherwise forcibly presented to the filler arrangement. Thus, a labyrinth seal will generally be sufficient to at least inhibit access of contaminants through the taper section to the conduit coupling end 10. Furthermore, with a recessed location below the bonnet edge 3 it will be understood by a venturi effect as the vehicle is driven a slight pressure depression or vacuum will be created to further inhibit ingress of contaminants by a back draw upon those contaminants. In such circumstances, the efficiency of the labyrinth seal should be sufficient to ensure insignificant levels of contaminants may pass through the filler arrangement to a fluid reservoir.

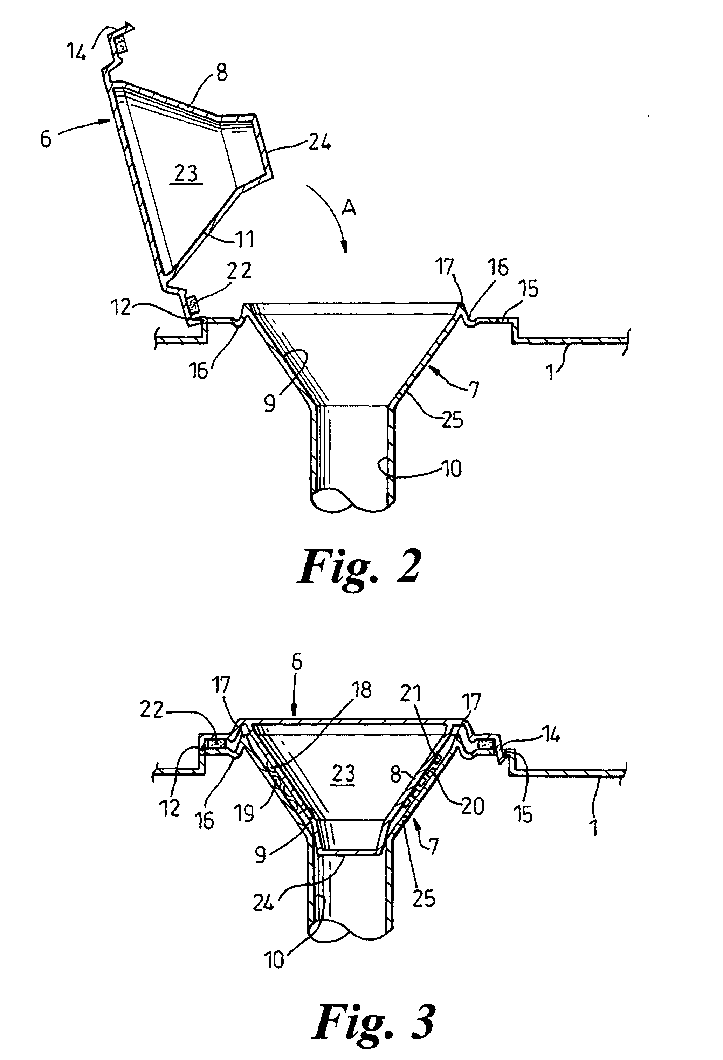

In Figure 2 a cross-section of the filler arrangement depicted in Figure 1 is illustrated in an open configuration whilst in Figure 3, the filler arrangement 6 is shown in a closed configuration. Thus, it will be seen that the stopper member 8 moves in the direction of arrowhead A about the hinge edge 12.

In the open configuration depicted in Figure 2, it will be appreciated that replacement fluid can be passed through the tapered section 9 of the filler funnel 7 to the conduit coupling end 10 which is connected to a reservoir for the vehicle functional mechanism i.e. wash/wipe wiper system of a motor vehicle. Clearly, the surfaces of the taper section 9 along with the conduit coupling end 10 should be as clean and free of debris as possible such that these contaminants are not washed into the reservoir. Thus, as described previously, the present filler arrangement ensures that there is an appropriate seal to inhibit ingress of contaminants such as dirt and rain water.

Figure 3 illustrates the present filler arrangement 6 in a closed configuration. Thus, a labyrinth seal is provided between the stopper member 8 and the filler funnel 7. In particular, this labyrinth seal is provided by respective opposed portions of the stopper member 8 and the funnel 7 such that there is an indirect pathway between the exterior of the filler arrangement 6 and the conduit coupling end 10. By such indirect and therefore labyrinth seal means it will be appreciated that ingress of contaminants is inhibited despite exposure inherent to exterior location of the filler arrangement in a motor vehicle 2.

The labyrinth seal of the present invention can be provided in a variety of manners. Thus, as illustrated in Figures 2 and 3 a gutter or moat edge 16 can be provided around the taper section 9 of the filler funnel 7. This gutter or moat edge 16 provides an expansion immediately after the abutting edges of the stop member 8 and filler funnel 7 in a closed configuration such that contaminants are trapped by this gutter or moat edge. Furthermore, these trapped contaminants may be disposed of through downward facing apertures in the gutter or moat edge such that they fall or drip downwards outside of the taper section 9 without presentation to the conduit coupling end 10 and therefore ingress to the reservoir.

More normally with regard to the present filler arrangement, there will be provided a weir lip 17 immediately adjacent the abutting edges of the stopper member 8 and filler funnel 7 such that any ingress of contaminant must flow upwards in order to enter the funnel 7 and therefore access to the conduit coupling end 10. In such circumstances, there is an indirect passage between the exterior of the filler arrangement 6 which creates a simple labyrinth seal inhibiting access of contaminants to the filler funnel 7.

As described above, the present invention relates to provision of a labyrinth seal between respective parts of the stopper member 8 and the filler funnel 7. Thus, as illustrated in Figure 3 by broken lines, the opposed surfaces of the stopper member 8 and the filler funnel 7 may include inter-engaging undulations 18, 19 or tongue and groove teeth 20, 21 such that there is an indirect, labyrinth pathway between the exterior edges of the respective stopper member 8 and filler funnel 7. Such inter-engagement between respective opposed surfaces of the stopper member 8 and filler funnel 7 will inhibit contaminant presentation in the filler arrangement. It will be understood that, as indicated previously, any contaminants presented to the filler arrangement 6 will not be forced and thus any obstacles such as the present labyrinth seal created between the stop member 8 and the filler funnel 7 will inhibit contaminant ingress.

In order to supplement the labyrinth seal it will be appreciated that typically a seal washer 22 will be provided about the edge between the stopper member 8 and the filler funnel 7. This washer 22 will typically comprise a foam or rubber member which is compressed between the stopper member 8 and the filler funnel 7 in order to achieve some degree of sealing therebetween in addition to providing a return bias acting against the lock mechanism comprising latch 14 and lock aperture 15. Thus, an effective seal will be provided by the present filler arrangement 6.

Clearly, an additional problem with regard to exterior location of a filler arrangement is the potential for mischievous filling or opening of the arrangement other than when required. Thus, typically the latch mechanism of the filler arrangement 6 may be remotely released from within the motor vehicle in a similar fashion to that with regard to the motor vehicle engine compartment bonnet or hood. In such circumstances, the washer 22 as indicated previously, will provide a bias towards release and uplift of the arrangement to facilitate manual displacement of the stopper member 8 to allow presentation of replacement fluid through the filler arrangement 6 and in particular the taper portion 9 and conduit coupling end 10.

In the embodiment depicted in the drawings, it will be noted that the stopper member 8 is secured to the filler funnel 7 through a hinge edge 12. Thus, it is possible to produce through an integral moulding a plastic component having an active hinge portion between the respective stopper member 8 and filler funnel 7. In such circumstances, the present filler arrangement will be relatively cheap to manufacture and will avoid an assembly step to combine the stopper member 8 and the filler funnel 7 into the filler arrangement 6. When plastically moulded it will be appreciated that in order to reduce material weight and therefore costs; typically the stopper member 8 will have a hollow cavity 23.

It will be noted from Figure 3 that in the closed configuration, typically a plug portion 24 of the stopper member 8 will enter a portion of the conduit coupling end 10 in order to provide additional sealing to prevent ingress of contaminants to a reservoir coupled to that end 10. In such circumstances, the material from which the stopper member 8 is manufactured may have a degree of at least surface resilience for engagement with the conduit coupling end 10. Alternatively, when the stopper member 8 has a hollow cavity 23 it will be understood that the walls of that member 8 and therefore the plug end 24 may flex into resilient engagement with the conduit coupling end to facilitate sealing.

It will be appreciated despite of the best efforts to inhibit contaminant ingress, generally there will be some contaminant such as rain water which will penetrate beyond the labyrinth seal. Thus, a very small diameter drain aperture 25 may be provided at a bottom end of the taper section in order to ensure collection of contaminant is limited to the gully below this aperture 25 constituted by the plug end 24 of the stopper member 8 and the taper portion 9 below that aperture 25. Clearly, the aperture 25 should be of a very small diameter such that when replacement liquid is poured through the filler arrangement, such liquid does not pass through the aperture 25 to a significant degree. Alternatively, the aperture 25 may be of a glandular operation such that only when the stopper member 8 robustly engages and therefore deforms and expands the bottom end or junction of the taper portion 9 and the conduit coupling end 10 will that the aperture 25 expanded to allow liquid to drain through it.

The present filler arrangement can be made from any appropriate materials acceptable for incorporation within a vehicle without altering the aesthetic appearance or creating assembly problems. Thus, for example, the filler arrangement could be a moulding as described previously using a polypropylene plastics material injection moulded or blow moulded to have a live hinge edge 12 between the respective stopper member 8 and filler funnel 7.

Clearly, in order to facilitate pouring of replacement fluid through the filler arrangement 6, generally the taper section 9 will have a relatively steep angle leading down towards the conduit coupling end 10. However, it will be also understood that where required, the taper section 9 could have a more shallow angle or even substantially flat configuration provided an appropriate labyrinth seal can be created with respect its associated stopper member.

It will be understood that the present filler arrangement is particularly useful with regard to situations where there will be a substantially perpendicular or vertical installation of the filler arrangement within a motor vehicle. Inherently with regard to such vertical or perpendicular installation filler arrangements within a motor vehicle, there is the potential for contaminant ingress particularly whilst the vehicle is stationary. Vertical installation presents a surface upon which contaminants such as rain water can lie such that they can seep into the filler arrangement and therefore contaminate any reservoir coupled to that filler arrangement. The present invention provides means for inhibiting ingress of contaminants to any reservoir through a vertically installed filler arrangement. It will be understood with rain water for example that by judicious choice of the gap between the surfaces of the labyrinth seal surfaces that the surface tension effect can be used to inhibit flow.

The embodiment of the present invention described above will be appreciated by those skilled in the art as only one example of how the present invention may be implemented and those skilled in the art will appreciate there are alternative embodiments within the scope of the present invention as defined by the appended claims.

## Claims

1. A filler arrangement coupled to a wash/wipe reservoir of a motor vehicle, whereby said filler arrangement can be accessed externally, **characterised in that** the filler arrangement comprises a filler funnel (7) with a taper section (9) leading to a conduit coupling end (10) and a stopper member (8) configured to be reciprocally shaped with respect to at least part of the taper section (9) to provide a labyrinth seal, when associated in use with that taper section (9), which is adequate to inhibit ingress of contaminants to the conduit coupling end (10) through the funnel section whilst that stopper member (8) can be displaced to allow access to the taper section (9) for presentation of a replacement fluid therethrough to the conduit coupling end (10).

2. An arrangement as claimed in Claim 1, **characterised in that** the reciprocal shape between the taper section (9) and the stopper member (8) comprises inter-engaging tongue and groove undulations (18,19) or teeth (20,21) in respectively opposed surfaces of the taper section (9) and the stopper member (8).

3. An arrangement as claimed in Claim 2, **characterised in that** the tongue and groove undulations (18,19) or teeth (20,21) are located about a top edge between the taper section (9) and the stopper member (8).

4. An arrangement as claimed in Claim 2, **characterised in that** the tongue and groove undulations (18,19) or teeth (20,21) are located about intermediate positions of the opposed surfaces between the taper section (9) and the stopper member (8).

5. An arrangement as claimed in any preceding claim, **characterised in that** a gutter or moat edge (16) is provided between the taper section (9) and the stopper member (8) in order to trap contaminants and so inhibit ingress of such contaminants toward the conduit coupling end (10).

6. An arrangement as claimed in Claim 5, **characterised in that** the gutter or moat edge (16) includes drain or sink holes or apertures through which contaminants can be released.

7. An arrangement as claimed in any preceding claim, **characterised in that** the stopper member (8) is vertically displaceable from the taper section (9) to allow access to the taper section (9) for presentation of the replacement fluid therethrough to the conduit coupling end (10).

8. An arrangement as claimed in any of Claims 1 to 6, **characterised in that** the stopper member (8) can be displaced by pivotal rotation relative to the taper section (9) for presentation of the replacement fluid therethrough to the conduit coupling end (10).

9. An arrangement as claimed in Claim 8, **characterised in that** the stopper member (8) and the filler funnel (7) are coupled together about a hinge edge (12) in order to allow pivotal rotation relative to each other.

10. An arrangement as claimed in any preceding claim, **characterised in that** a seal washer (22) is provided about the edge between the stopper member (8) and the filler funnel (7).

11. An arrangement as claimed in Claim 10, **characterised in that** the seal washer (22) provides a bias for the filler arrangement which acts to facilitate release of the stopper member (8) relative to the filler funnel (7) against a locking mechanism.

12. A filler arrangement as claimed in any preceding claim, **characterised in that** the arrangement is made from an integral plastics material moulding.

13. A motor vehicle including a filler arrangement as claimed in any preceding claim, **characterised in that** the filler arrangement is arranged in a vertical presentation relative to a body structure of the motor vehicle (2).

14. A motor vehicle as claimed in Claim 14, **characterised in that** the filler arrangement is located in a plenum chamber cover (1) between a windscreen (5) and a rear bonnet edge (3) of the motor vehicle (2).

## Patentansprüche

1. Einfüllanordnung, die mit einem Wascher-Wischer-Behälter eines Kraftfahrzeugs gekoppelt ist, wobei die Einfüllanordnung von außen zugänglich sein kann, **dadurch gekennzeichnet, daß** die Einfüllanordnung einen Einfülltrichter (7) mit einem konischen Abschnitt (9), der zu einem Schlauchanschlußende (10) führt, und ein Sperrelement (8) umfaßt, das so konfiguriert ist, daß es im Verhältnis zu mindestens einem Teil des konischen Abschnitts (9) als Gegenstück ausgebildet ist, um eine Labyrinthdichtung bereitzustellen, die, wenn sie im Gebrauch im Verbund mit diesem konischen Abschnitt (9) wirkt, dafür geeignet ist, ein Eindringen von Verunreinigungen zum Schlauchanschlußende (10) durch den Trichterabschnitt einzuschränken, während das Sperrelement (8) verschoben werden kann, um einen Zugang zum konischen Abschnitt (9) zu ermöglichen, so daß dadurch dem Schlauchanschlußende (10) ein Ersatzfluid zugeführt werden kann.

2. Anordnung nach Anspruch 1, **dadurch gekennzeichnet, daß** die als Gegenstück ausgebildete Form zwischen dem konischen Abschnitt (9) und dem Sperrelement (8) ineinandergreifende Nut- und Federwellungen (18, 19) oder Zähne (20, 21) in jeweils gegenüberliegenden Oberflächen des konischen Abschnitts (9) und des Sperrelements (8) umfaßt.

3. Anordnung nach Anspruch 2, **dadurch gekennzeichnet, daß** sich die Nut- und Federwellungen (18, 19) oder Zähne (20, 21) an einer oberen Kante zwischen dem konischen Abschnitt (9) und dem Sperrelement (8) befinden.

4. Anordnung nach Anspruch 2, **dadurch gekennzeichnet, daß** sich die Nut- und Federwellungen (18, 19) oder Zähne (20, 21) an Zwischenpositionen der gegenüberliegenden Oberflächen zwischen dem konischen Abschnitt (9) und dem Sperrelement (8) befinden.

5. Anordnung nach einem der vorstehend aufgeführten Ansprüche, **dadurch gekennzeichnet, daß** eine Rinnenoder Vertiefungskante (16) zwischen dem konischen Abschnitt (9) und dem Sperrelement (8) vorgesehen ist, um Verunreinigungen aufzufangen und damit ein Eindringen solcher Verunreinigungen zum Schlauchanschlußende (10) hin einzuschränken.

6. Anordnung nach Anspruch 5, **dadurch gekennzeichnet, daß** die Rinnen- oder Vertiefungskante (16) Ablaß- oder Senklöcher oder Durchgänge beinhaltet, durch die Verunreinigungen abgeführt werden können.

7. Anordnung nach einem der vorstehend aufgeführten Ansprüche, **dadurch gekennzeichnet, daß** das Sperrelement (8) gegenüber dem konischen Abschnitt (9) vertikal verschiebbar ist, um einen Zugang zum konischen Abschnitt (9) zu ermöglichen, damit das Ersatzfluid dadurch dem Schlauchanschlußende (10) zugeführt werden kann.

8. Anordnung nach einem der Ansprüche 1 bis 6, **dadurch gekennzeichnet, daß** das Sperrelement (8) durch Schwenkdrehung im Verhältnis zum konischen Abschnitt (9) verschoben werden kann, um das Ersatzfluid dadurch dem Schlauchanschlußende (10) zuzuführen.

9. Anordnung nach Anspruch 8, **dadurch gekennzeichnet, daß** das Sperrelement (8) und der Einfülltrichter (7) an einer Scharnierkante (12) miteinander gekoppelt sind, um eine Schwenkdrehung im Verhältnis zueinander zu ermöglichen.

10. Anordnung nach einem der vorstehend aufgeführten Ansprüche, **dadurch gekennzeichnet, daß** eine Dichtungsscheibe (22) an der Kante zwischen dem Sperrelement (8) und dem Einfülltrichter (7) vorgesehen ist.

11. Anordnung nach Anspruch 10, **dadurch gekennzeichnet, daß** die Dichtungsscheibe (22) eine Vorspannung für die Einfüllanordnung bereitstellt, die dazu dient, die Freigabe des Sperrelements (8) im Verhältnis zum Einfülltrichter (7) gegen einen Verriegelungsmechanismus zu erleichtern.

12. Einfüllanordnung nach einem der vorstehend aufgeführten Ansprüche, **dadurch gekennzeichnet, daß** die Anordnung aus einem integralen Kunststoffmaterialformteil hergestellt ist.

13. Kraftfahrzeug mit einer Einfüllanordnung nach einem der vorstehend aufgeführten Ansprüche, **dadurch gekennzeichnet, daß** die Einfüllanordnung im Verhältnis zu einer Karosseriekonstruktion des Kraftfahrzeugs (2) vertikal angeordnet ist.

14. Kraftfahrzeug nach Anspruch 13, **dadurch gekennzeichnet, daß** sich die Einfüllanordnung in einer _{P}lenumkammerabdeckung (1) zwischen einer Windschutzscheibe (5) und einer hinteren Haubenkante (3) des Kraftfahrzeugs (2) befindet.

## Revendications

1. Dispositif de remplissage couplé à un réservoir de lavage/essuie-glace d'une voiture automobile, de façon qu'on puisse accéder de l'extérieur à ce dispositif de remplissage,
**caractérisé en ce que**
le dispositif de remplissage comprend :
un entonnoir de remplissage (7) muni d'une section conique (9) aboutissant à une extrémité d'accouplement de conduit (10), et un élément de bouchon (8) configuré pour avoir une forme réciproque de celle d'une partie au moins de la section conique (9), de manière à former un joint d'étanchéité en labyrinthe lorsqu'il est associé à la section conique (9) en cours d'utilisation, ce joint d'étanchéité étant destiné à empêcher convenablement l'accès de produits de contamination à l'extrémité d'accouplement de conduit (10) en passant par la section d'entonnoir, tandis que l'élément de bouchon (8) peut être déplacé pour permettre l'accès à la section conique (9) afin d'amener un fluide de remplacement, par cette section conique, à l'extrémité d'accouplement de conduit (10).

2. Dispositif selon la revendication 1,
**caractérisé en ce que**
la forme réciproque entre la section conique (9) et l'élément de bouchon (8) comprend l'engagement mutuel d'une languette et d'ondulations à rainures (18, 19) ou de dents (20, 21) dans les surfaces opposées respectives de la section conique (9) et de l'élément de bouchon (8).

3. Dispositif selon la revendication 2,
**caractérisé en ce que**
la languette et les ondulations à rainures (18, 19) ou les dents (20, 21) sont placées autour d'un bord supérieur entre la section conique (9) et l'élément de bouchon (8).

4. Dispositif selon la revendication 2,
**caractérisé en ce que**
la languette et les ondulations à rainures (18, 19) ou les dents (20, 21) sont placées autour de positions intermédiaires des surfaces opposées entre la section conique (9) et l'élément de bouchon (8).

5. Dispositif selon l'une quelconque des revendications précédentes,
**caractérisé en ce qu'**
un bord de gouttière ou rigole (16) est prévu entre la section conique (9) et l'élément de bouchon (8) pour piéger les produits de contamination et empêcher ainsi ces produits de contamination de pénétrer vers l'extrémité d'accouplement de conduit (10).

6. Dispositif selon la revendication 5,
**caractérisé en ce que**
le bord de gouttière ou rigole (16) comprend des trous ou des ouvertures de drainage ou d'évacuation par lesquels les produits de contamination peuvent être évacués.

7. Dispositif selon l'une quelconque des revendications précédentes,
**caractérisé en ce que**
l'élément de bouchon (8) peut être écarté verticalement de la section conique (9) pour permettre l'accès à cette section conique (9) de manière à amener le fluide de remplacement, à travers celle-ci, jusqu'à l'extrémité d'accouplement de conduit (10).

8. Dispositif selon l'une quelconque des revendications 1, à 6,
**caractérisé en ce que**
l'élément de bouchon (8) peut être déplacé par une rotation de pivotement par rapport à la section conique (9) pour pouvoir amer le fluide de remplacement, à travers cette section conique, jusqu'à l'extrémité d'accouplement de conduit (10).

9. Dispositif selon la revendication 8,
**caractérisé en ce que**
l'élément de bouchon (8) et l'entonnoir de remplissage (7) sont accouplés l'un à l'autre le long d'un bord à charnière (12) pour permettre la rotation de pivotement de l'un par rapport à l'autre.

10. Dispositif selon l'une quelconque des revendications précédentes,
**caractérisé en ce qu'**
une rondelle d'étanchéité (22) est prévue autour du bord compris entre l'élément de bouchon (8) et l'entonnoir de remplissage (7).

11. Dispositif selon la revendication 10,
**caractérisé en ce que**
la rondelle d'étanchéité (22) fournit une poussée agissant sur le dispositif de remplissage pour faciliter la libération de l'élément de bouchon (8) par rapport à l'entonnoir de remplissage (7), contre l'action d'un mécanisme de verrouillage.

12. Dispositif selon l'une quelconque des revendications précédentes,
**caractérisé en ce que**
le dispositif est réalisé par un moulage de matière plastique d'une seule pièce.

13. Véhicule automobile comprenant un dispositif de remplissage selon l'une quelconque des revendications précédentes,
**caractérisé en ce que**
le dispositif de remplissage est monté dans une disposition verticale par rapport à une structure de carrosserie du véhicule automobile (2).

14. Véhicule automobile selon la revendication 13,
**caractérisé en ce que**
le dispositif de remplissage est placé dans un couvercle (1) de chambre de ventilateur entre le pare-brise (5) et un bord de capot arrière (3) du véhicule automobile (2).
